# FASCICULE DE BREVET EUROPEEN

(11) **EP 3 186 015 B1**
(45) Date de publication et mention de la délivrance du brevet: **17.02.2021**
(21) Numéro de dépôt: 15760217.8
(22) Date de dépôt: 18.08.2015
(51) Int. Cl.: B05C 5/02, B05C 7/00, B05C 7/02, B05B 13/06, B29C 73/02, B05B 1/14, B05C 9/10

(54) **DISPOSITIF ET PROCÉDÉ DE RÉPARATION D'UN TROU D'UNE PIÈCE**
VORRICHTUNG UND VERFAHREN ZUM AUSBESSERN EINES LOCHES IN EINEM TEIL
DEVICE AND METHOD FOR REPAIRING A HOLE IN A PART

(30) Priorité: 27.08.2014 FR 1458009
(43) Date de publication de la demande: 05.07.2017
(73) Titulaire: SAFRAN AIRCRAFT ENGINES, 75015 Paris (FR)
(72) Inventeur: TELLIER, Florian, F-77550 Moissy-Cramayel Cedex (FR); PAIXAO, Adrien, F-77550 Moissy-Cramayel Cedex (FR)
(74) Mandataire: Cabinet Beau de Loménie
(86) Numéro de dépôt international: PCT/FR2015/052217
(87) Numéro de publication internationale: WO 2016/030607

(56) Documents cités:
- EP-A1- 2 939 822
- WO-A1-97/36688
- GB-A- 1 172 019
- US-A- 3 488 213
- US-A1- 2004 099 699

## Description

### DOMAINE DE L'INVENTION

Le présent exposé concerne la maintenance et la réparation de pièces, et plus particulièrement un dispositif et un procédé de réparation d'un trou d'une pièce, notamment d'une pièce en matériau composite.

### ARRIÈRE-PLAN TECHNOLOGIQUE

Dans de nombreux domaines techniques, incluant la fabrication de pièces pour l'industrie aéronautique, les pièces fabriquées sont souvent percées pour y intégrer des inserts, des vis, des axes, ou des éléments de fixation. Selon l'utilisation du perçage, les caractéristiques du trou ménagé peuvent différer ; par exemple, un trou peut être lissé, lamé, taraudé, etc. Notamment dans le cas où le trou est destiné à faire passer et maintenir un élément de fixation, la conformité de la géométrie du trou est un critère important qui conditionne le bon fonctionnement de la pièce ou de l'assemblage auquel la pièce appartient.

Cependant, les trous percés dans les pièces peuvent être endommagés lors du perçage lui-même ou lors des sollicitations thermiques ou mécaniques du trou pendant l'utilisation de la pièce. C'est notamment le cas pour les pièces en matériau composite, par exemple les pièces comprenant une préforme tissée noyée dans une matrice. Dans de nombreux cas, les trous percés présentent des défauts de type écaillage des plis composites, délaminages ou fissures.

Actuellement, les opérations de réparation de ces défauts sont manuelles. Par exemple, la réparation d'un trou peut consister en l'application d'une résine avec un pinceau pour reboucher des cavités (écaillages, fissures) apparues à la périphérie du trou. Toutefois, une telle réparation manuelle est difficile à réaliser compte tenu du diamètre parfois faible du trou. En outre, elle présente des risques pour l'opérateur (la résine est polluante), sa qualité est très variable et il n'est pas possible de s'assurer que la résine appliquée bouche bien l'intégralité de la cavité.

Le document US 2004/099699 décrit un dispositif de réparation d'un trou selon le préambule de la revendication 1 et un procédé selon le préambule de la revendication 10. Le document EP 2 939 822 décrit un procédé et un appareil pour réparer des structures composites délaminées.

### PRÉSENTATION DE L'INVENTION

Le but de la présente invention est de remédier au moins substantiellement aux inconvénients mentionnés ci-dessus.

A cet effet, le présent exposé concerne un dispositif de réparation d'un trou d'une pièce selon la revendication 1, comprenant un réservoir de résine, un embout d'injection relié au réservoir, l'embout étant prévu pour être inséré dans le trou, l'embout comprenant au moins un orifice d'injection permettant l'injection de résine dans au moins une cavité située autour de l'embout.

Dans le présent exposé, sauf mention contraire, on désigne par résine au sens large tout fluide durcissable, ce qui inclut les résines mono-composants ou multi-composants, à polymérisation chimique ou non et/ou avec influence de paramètres externes tels que la température ou la pression (par exemple les polymères thermoplastiques), les colles, etc. La résine peut être durcissable à chaud ou à froid, éventuellement thermodurcissable de manière irréversible. La pièce peut être notamment en matériau composite ; la pièce comprend alors une préforme (fibres courtes ou fibres longues) noyée dans une matrice, notamment une matrice organique, thermoplastique ou céramique. La préforme peut être tissée. Dans ce cas, la préforme peut être un empilement de plis bidimensionnels (2D) ou une préforme tissée 3D.

Le trou à réparer peut être un trou lisse, un trou taraudé ou tout type de trou. Le trou à réparer peut présenter au moins l'un des défauts suivants : un écaillage, une fissure, un délaminage, ou tout défaut se traduisant par la présence d'une cavité (absence non conforme de matière) située aux abords du trou. La cavité donne sur le pourtour du trou. Par exemple, la cavité est située radialement autour du trou. La forme du trou définit un axe qui peut être une ligne droite, courbe ou brisée. Une direction radiale est une direction perpendiculaire à l'axe et coupant l'axe.

Le dispositif de réparation précédemment décrit fournit une solution fiable pour réparer un trou de manière simple, reproductible et sécurisée pour l'opérateur qui n'est pas en contact avec la résine.

Si le trou est traversant, le dispositif peut comprendre un canal d'entrée entre le réservoir et un côté de l'embout d'injection, et un canal de sortie à placer de l'autre côté de l'embout d'injection pour évacuer la résine excédentaire.

Le présent exposé concerne également un procédé de réparation d'un trou d'une pièce selon la revendication 10, comprenant :
- l'insertion, dans le trou, d'un embout d'injection relié à un réservoir et comprenant au moins un orifice d'injection ;
- l'injection d'une résine, par l'orifice d'injection, dans au moins une cavité située autour de l'embout ;
- le durcissement de la résine, l'embout demeurant inséré dans le trou ;
- le retrait de l'embout hors du trou.

Un tel procédé permet de réparer un trou de manière fiable, simple et reproductible.

Lors de l'injection de résine, grâce à l'orifice ou aux orifices d'injection, de la résine emplit tout l'espace libre situé dans le trou, autour de l'embout, et notamment la ou les cavités qui communiquent avec le trou et qui l'on souhaite reboucher. Ainsi, quand on retire l'embout, il reste dans la pièce un trou de forme sensiblement complémentaire à la forme extérieure de l'embout. Par forme sensiblement complémentaire, on prend en compte le fait que l'opération de retrait de l'embout peut modifier légèrement le trou pour lui donner une forme légèrement différente de la forme extérieure de l'embout.

On comprend ainsi qu'en donnant à l'embout une forme sensiblement voire exactement complémentaire du trou souhaité, l'injection de résine permet de former ou réparer la paroi du trou autour de l'embout de sorte qu'après le retrait de l'embout, le trou soit directement dans une forme finale souhaitée, sans nécessiter d'usinage supplémentaire. En d'autres termes, l'embout a la triple fonction d'injecter de la résine dans la cavité, d'empêcher le rebouchage du trou par la résine et de donner au trou, après extraction de l'embout, une forme souhaitée.

L'invention est applicable à la réparation de trous borgnes comme de trous traversants.

L'embout peut avoir une forme extérieure variable. Dans ce cas, le fait que la forme extérieure de l'embout soit sensiblement complémentaire de la forme du trou est à juger lorsque l'embout est inséré dans le trou et pendant l'injection de résine.

Dans certains modes de réalisation du dispositif de réparation précédemment décrit, le dispositif de réparation comprend en outre un élément d'étanchéité configuré pour isoler hermétiquement une zone de la pièce comprenant le trou lorsque l'embout est inséré dans le trou. L'élément d'étanchéité assure l'étanchéité à chaque extrémité ouverte du trou (d'un côté pour un trou borgne, des deux côtés pour un trou traversant), de façon que la résine injectée dans la zone isolée par l'embout ne sorte pas de la zone isolée. L'élément d'étanchéité peut avoir un rôle de maintien. L'élément d'étanchéité peut être un bridage, c'est-à-dire une pièce ou un ensemble de pièces configuré pour maintenir la pièce dans sa forme souhaitée pendant l'injection. La zone isolée comprenant le trou comprend aussi l'embout d'injection, au moins en partie, lorsque l'embout d'injection est inséré dans le trou. L'élément d'étanchéité peut être formé de plusieurs sous-éléments, notamment de deux sous-éléments disposés de part et d'autre du trou.

Dans certains modes de réalisation, le dispositif de réparation comprend en outre des moyens de chauffage configurés pour chauffer la résine provenant du réservoir. Au moins une des parties suivantes peut être chauffante ou comprendre un réchauffeur : le réservoir, le canal d'entrée, l'élément d'étanchéité, l'embout. Les moyens de chauffage permettent de contrôler la température d'injection de la résine, de façon à améliorer sa cohésion avec la pièce, à contrôler les propriétés intrinsèques de la résine et à contrôler l'instant de durcissement.

Dans certains modes de réalisation, le dispositif de réparation comprend en outre un système de mise sous vide configuré pour mettre sous vide la zone isolée. La mise sous vide de la zone isolée permet le retrait de l'air dans la cavité et des porosités entre la pièce et la résine. La zone est donc hermétiquement isolée aussi bien pour la mise sous vide que pour l'injection de résine.

De manière complémentaire ou alternative, le dispositif peut comprendre des moyens de mise sous pression de la résine à injecter. Ces moyens de mise sous pression peuvent comprendre un compresseur ou un injecteur de résine, ou encore un pistolet pneumatique directement raccordé à l'embout chauffant.

L'embout est prévu pour être extrait du trou après durcissement (éventuellement partiel) de la résine. En d'autres termes, l'embout comprend des moyens pour assurer son extraction du trou après durcissement (éventuellement partiel) de la résine. L'embout est donc configuré de sorte que, malgré le durcissement de la résine, son extraction n'endommage pas la pièce autour de l'embout. Par exemple, dans certains modes de réalisation, l'embout d'injection peut être recouvert d'un matériau anti-adhérent, par exemple teflonné, par exemple en aluminium teflonné. L'embout peut être recouvert dudit matériau à l'extérieur et/ou à l'intérieur (l'intérieur et l'extérieur étant ici définis par rapport à une direction radiale). D'autres exemples seront donnés par la suite.

De plus, l'embout a généralement une forme allongée suivant la direction d'extraction de l'embout. L'embout peut notamment être de forme générale cylindrique.

Dans certains modes de réalisation, l'embout comprend une baudruche. Une baudruche est un élément gonflable. La baudruche peut être dans un matériau quelconque qui soit compatible avec les matériaux de la pièce, la résine et les conditions de réparation (notamment température et pression). Etant gonflable, la baudruche peut être remplie avec un fluide (air, eau, huile, etc.) de façon à augmenter de volume. La baudruche forme alors tout ou partie de la paroi extérieure de l'embout. Ainsi, la forme extérieure de l'embout s'adapte à des géométries de trou diverses et/ou complexes.

La baudruche est configurée pour être mise sous pression lors de l'injection de résine et jusqu'au durcissement de celle-ci ; elle est dégonflée pour permettre l'extraction de l'embout. La baudruche peut comporter au moins un orifice traversant, formant orifice d'injection, à travers lequel la résine est injectée dans la au moins une cavité.

Dans certains modes de réalisation, le dispositif de réparation comprend en outre un capteur de température et/ou un capteur de pression. Un tel capteur permet de suivre l'évolution de la température et/ou de la pression et de vérifier que le cycle d'injection a été effectué dans les conditions requises, notamment en amont de la zone isolée, en aval de la zone isolée ou dans la zone isolée, selon l'emplacement dudit capteur. La surveillance de température permet entre autres de commander avec précision le durcissement de la résine et de vérifier que la température de polymérisation est optimale. La surveillance de la pression permet entre autres de contrôler le remplissage de la au moins une cavité. Le capteur peut être intégré dans l'élément d'étanchéité ; dans ce cas, le dispositif de réparation est compact et facile à mettre en œuvre.

Par exemple, dans le cas de l'injection d'une résine organique avec un capteur de pression en amont de la zone isolée, lorsque la résine commence à se figer au cours de la cuisson, la viscosité évolue jusqu'à ce que la résine durcisse dans les canaux du dispositif de réparation. A ce moment, la résine ne peut plus circuler en sortie de l'outillage de réparation. C'est alors la phase dite « de gavage », dont le démarrage est caractérisé par une augmentation de la pression mesurée en amont de l'embout. Cette phase de gavage permet de compacter au maximum la résine dans la zone réparée et de limiter l'expansion des porosités dans la zone injectée lors de la polymérisation de la résine (dégagement exothermique lors de la réticulation des résines organiques).

Dans certains modes de réalisation, l'embout est configuré pour être déconnecté du réservoir. En d'autres termes, l'embout est amovible. Cela facilite le remplacement de l'embout. Par ailleurs, cela permet de prévoir plusieurs embouts pour le dispositif de réparation, chaque embout étant adapté à la géométrie et aux caractéristiques internes d'un type ou d'un calibre de trou.

Dans certains modes de réalisation, l'embout comprend un corps creux, l'au moins un orifice d'injection étant disposé sur une surface extérieure du corps creux. La résine peut être injectée par l'intérieur du corps creux vers l'extérieur du corps creux, à travers le ou les orifice(s) d'injection. L'orifice d'injection peut être de forme quelconque, par exemple une ouverture circulaire localisée. Alternativement ou en complément, l'orifice d'injection peut s'étendre sur la longueur et la circonférence de l'embout (ouverture hélicoïdale ou de type hélice). Le corps creux peut présenter une pluralité d'orifices d'injection répartis sur la surface extérieure du corps creux, c'est-à-dire disposés régulièrement ou irrégulièrement sur l'ensemble de l'embout afin de pouvoir effectuer une injection couvrant sensiblement toutes les directions radiales et/ou toute la hauteur du trou à réparer.

Dans certains modes de réalisation, la surface totale des orifices d'injection est inférieure à 40%, de la surface extérieure de l'embout, voire du corps creux, de préférence inférieure à 35%, de préférence encore inférieure à 30%, de préférence encore inférieure à 25%. Ce pourcentage donne une estimation du couple à appliquer pour retirer l'embout en cassant la résine durcie dans les orifices d'injection.

Dans certains modes de réalisation, la surface totale des orifices d'injection est supérieure à 5% de la surface extérieure de l'embout, voire du corps creux.

Dans le procédé de réparation précédemment décrit, l'injection peut être effectuée sous une pression supérieure à la pression atmosphérique. Alternativement ou en complément, le procédé peut comprendre, avant et/ou pendant l'injection, une étape de mise à vide d'une zone comprenant le trou, isolée hermétiquement. La mise sous vide permet de retirer l'air avant l'injection et éliminer les porosités pendant l'injection. Dans certains modes de réalisation, l'étape de mise sous vide peut durer pendant toute l'injection.

Dans certains modes de réalisation, l'injection est arrêtée lorsque la pression dans la zone isolée n'augmente plus. Pendant une première phase de l'injection, la pression augmente peu car la résine injectée occupe la cavité (le défaut) de la pièce et remplace simplement l'air qui s'y trouvait auparavant. Lorsque toutes les cavités sont comblées, la résine ne peut plus s'accumuler dans la pièce, la pression augmente donc plus fortement puis stagne à une valeur maximale. Il est avantageux d'arrêter alors l'injection de peur que l'excès de pression n'entraîne une réouverture des cavités, notamment lorsqu'il s'agit de fissures.

Dans certains modes de réalisation, l'injection est effectuée à une température régulée grâce à des moyens de chauffage.

Dans certains modes de réalisation, le procédé comprend, après le retrait de l'embout, l'analyse de la carotte de résine durcie restée dans l'embout. Cette analyse permet de connaître les propriétés physico-chimiques de la résine durcie et donc d'estimer si la résine injectée dans la pièce a bien les propriétés escomptées pour la réparation.

Selon un autre mode de réalisation, le présent exposé concerne également un procédé de réparation d'un trou d'une pièce, comprenant :
- l'insertion, dans le trou, d'un embout d'injection ayant une forme extérieure sensiblement complémentaire de la forme du trou ;
- la fixation d'un élément d'étanchéité sur la pièce de façon à isoler hermétiquement une zone comprenant le trou ;
- l'injection d'une résine ;
- le retrait de l'élément d'étanchéité et de l'embout après durcissement de la résine.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente une vue générale schématique d'un dispositif de réparation selon un mode de réalisation de l'invention ;
- la figure 2 représente schématiquement un détail de la figure 1 autour de l'embout d'injection du dispositif de réparation ;
- la figure 3 est une évolution possible de la température et de la pression, enregistrée en deux points du dispositif d'injection, en fonction du temps ;
- la figure 4 est une vue en coupe schématique d'un embout, inséré dans la pièce à réparer, selon un deuxième mode de réalisation de l'invention ;
- la figure 5 est une vue en coupe schématique d'un embout, inséré dans la pièce à réparer, selon un troisième mode de réalisation de l'invention ;
- la figure 6 est une vue en coupe schématique d'un embout, inséré dans la pièce à réparer, selon un quatrième mode de réalisation de l'invention ;
- la figure 7A est une vue schématique en perspective d'un embout selon un cinquième mode de réalisation de l'invention, et la figure 7B représente un exemple d'outil permettant l'extraction d'un tel embout.

### DESCRIPTION DÉTAILLÉE DE L'INVENTION

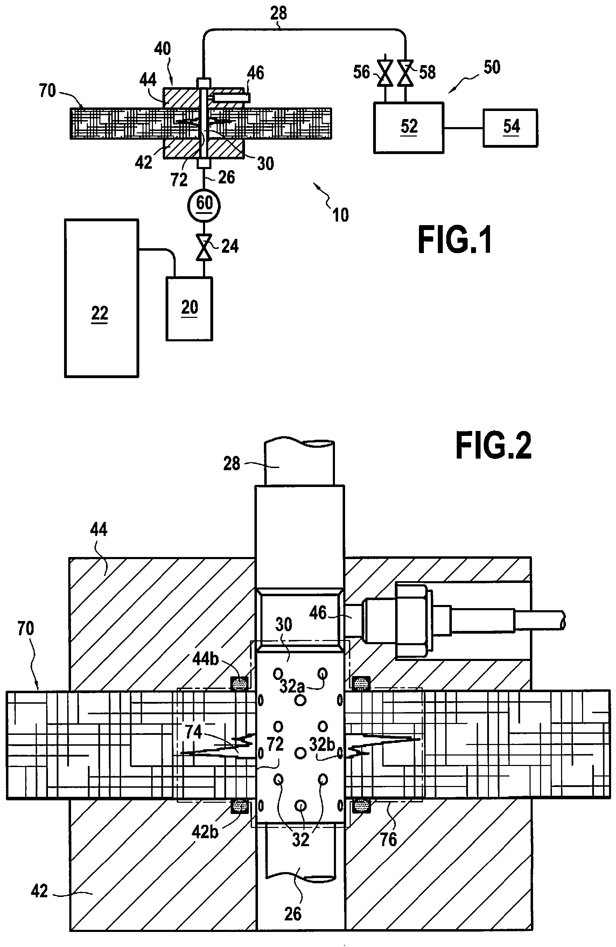

La figure 1 présente une vue générale schématique d'un dispositif de réparation 10 d'un trou d'une pièce selon un mode de réalisation de l'invention. Comme indiqué précédemment, le dispositif de réparation 10 comprend un réservoir de résine 20 et un embout d'injection 30 (embout 30) relié au réservoir 20. Sur la figure 1, l'embout 30 est représenté inséré dans un trou d'une pièce 70 à réparer. L'embout 30 et la pièce 70 sont entourés par un élément d'étanchéité 40 qui sera décrit par la suite.

Le trou de la pièce 70 est ici un trou traversant. D'un côté, l'embout 30 est relié au réservoir 20 par un canal d'entrée 26. D'un autre côté du trou, l'embout 30 est relié à un dispositif de mise sous vide 50 par un canal de sortie 28.

Une vanne 24 est disposée sur le canal d'entrée 26 pour permettre ou empêcher l'injection de résine en provenance du réservoir 20. Par ailleurs, un injecteur (ou pot pression) 22 est relié au réservoir 20 pour injecter la résine sous pression à partir du réservoir 20. Le réservoir 20 et l'injecteur 22 peuvent faire partie d'un même équipement. Enfin, un réchauffeur 60 est disposé sur le canal d'entrée, ici entre la vanne 24 et l'embout 30, pour réchauffer la résine sortant du réservoir 20 avant son injection par l'embout 30. Selon une variante, le dispositif peut comprendre plusieurs réchauffeurs. Ici, le réchauffeur 60 est un composant connu en soi. Dans ce mode de réalisation, le réchauffeur 60 prend la forme d'un élément métallique comprenant au moins une résistance chauffante contrôlable et régulable en température, et dans lequel passe la résine. La température de la résine en entrée et/ou en sortie du réchauffeur 60 peut être mesurée par des thermocouples (non représentés). De surcroît, dans le présent mode de réalisation, l'embout 30 est lui-même chauffant. Selon une variante, les canaux de passage de résine peuvent être enveloppés dans une gaine chauffante pour limiter les pertes thermiques des canaux avec l'environnement extérieur entre le réservoir et l'embout chauffant. Alternativement ou en complément, l'embout 30 et/ou la pièce 70 à réparer peuvent être protégés thermiquement de l'environnement extérieur ambiant, en les mettant dans une étuve ou en les enveloppant entre des tapis chauffants.

L'élément d'étanchéité 40 est ici composé de deux sous-éléments 42, 44 installés de part et d'autre du trou et de l'embout 30 pour assurer l'étanchéité de la zone dans laquelle la résine est injectée et le vide est fait par le dispositif de mise sous vide 50. Les sous-éléments 42, 44 sont maintenus sur la pièce 70 et sont adaptés à la géométrie de la pièce 70 ; par exemples, les sous-éléments 42, 44 sont ventousés sur la pièce 70. Outre l'étanchéité, les sous-éléments 42, 44 ont aussi pour but de maintenir la pièce 70 pour éviter sa déformation lors du procédé de réparation. Par exemple, l'élément d'étanchéité 40 peut comprendre une ceinture de bridage en matériau thermoplastique, adaptée pour épouser la forme de la pièce 70. Selon un autre exemple, l'élément d'étanchéité 40 peut comprendre une ceinture de bridage en matériau élastomère, de façon à se déformer faiblement pour épouser la forme de la pièce 70 sans endommager la pièce 70. Afin d'éviter les pertes thermiques dans la zone isolée, comme indiqué précédemment, l'élément d'étanchéité 40 peut être lui-même chauffant ou chauffé en périphérie à l'aide de tapis chauffants ou dans une étuve.

Par ailleurs, un capteur 46 est placé en aval de l'embout d'injection 30. Le capteur 46 est ici un capteur combiné de pression et de température. Comme on le verra plus nettement sur la figure 2, le capteur 46 est intégré dans l'élément d'étanchéité 40, plus particulièrement dans son sous-élément aval 44.

Le canal de sortie 28 relie l'embout 30 à un dispositif de mise sous vide 50. Le dispositif de mise sous vide 50 est classique et connu en soi. Le dispositif de mise sous vide 50 comprend ici un piège à vide 52 relié à une pompe à vide 54 et connecté au canal de sortie 28 par l'intermédiaire d'une vanne 58. Le piège à vide 52 est une enceinte intermédiaire entre l'embout 30 et la pompe à vide 54, servant de tampon pour recueillir les fluides (notamment de la résine) qui pourraient endommager la pompe à vide 54. Une autre vanne 56, donnant sur l'extérieur du dispositif, permet de fermer ou d'ouvrir le circuit dans le piège à vide, de manière à favoriser l'éjection des porosités présentes dans la résine injectée. L'ouverture de la vanne 56 n'est pas obligatoire ; des tests ont montrés qu'une telle étape est très consommatrice de résine (résine perdue). Le niveau de vide pouvant être atteint par le dispositif de mise sous vide peut valoir en pression relative 0,7 bar, de préférence 0,9 bar, de préférence 0,99 bar, de préférence 0,996 bar (soit respectivement 0,3 bar, 0,1 bar, 0,01 bar, 4 mbar en pression absolue).

La figure 2 montre en détail la zone autour de l'embout 30 de la figure 1. Comme on peut le voir, la pièce 70 est ici une pièce en matériau composite, dont la préforme peut être une préforme tissée tridimensionnelle ou bidimensionnelle. La pièce 70 comprend un trou 72, ici un trou lisse cylindrique, lors de la formation duquel un défaut a été créé, en l'espèce une cavité 74 (ici de type délaminage). Comme indiqué précédemment, le défaut peut avoir été créé lors de la formation du trou 72 ou bien par des sollicitations mécaniques du trou 72 lors de l'utilisation de la pièce 70.

Pour réparer le trou 72, en l'occurrence reboucher la cavité 74, l'embout 30 est inséré dans le trou 72. L'embout 30 comprend ici un corps creux, de forme cylindrique, dont le rayon externe est égal (ou très légèrement inférieur) au rayon interne du trou 72. Ainsi, l'embout 30 épouse la forme du trou 72 à réparer. L'embout 30 comprend une pluralité d'orifices d'injection 32 pour l'injection radiale de la résine autour de l'embout 30, et notamment dans la cavité 74. Dans ce mode de réalisation, comme illustré sur la figure 2, les orifices d'injection 32 sont répartis régulièrement sur la hauteur de l'embout 30 (dans le sens axial) et sur le pourtour de l'embout 30 (c'est-à-dire sur la circonférence de l'embout 30), de façon que la résine puisse être injectée, par l'embout 30, dans toutes les directions. Ainsi, lorsqu'un orifice d'injection est en contact avec un élément d'étanchéité ou une partie dense de la pièce 70, comme par exemple les orifices 32a tels que représentés sur la figure 2, aucune résine ne peut être injectée par cet orifice. A l'inverse, lorsqu'un orifice d'injection est en communication avec la cavité 74, comme par exemple l'orifice 32b tel que représenté sur la figure 2, de la résine peut être injectée par cet orifice afin de combler la cavité 74.

Comme illustré sur la figure 2, l'élément d'étanchéité peut comprendre des joints tels que les joints toriques 42b, 44b, respectivement disposés entre les sous-éléments 42, 44 et la pièce 70.

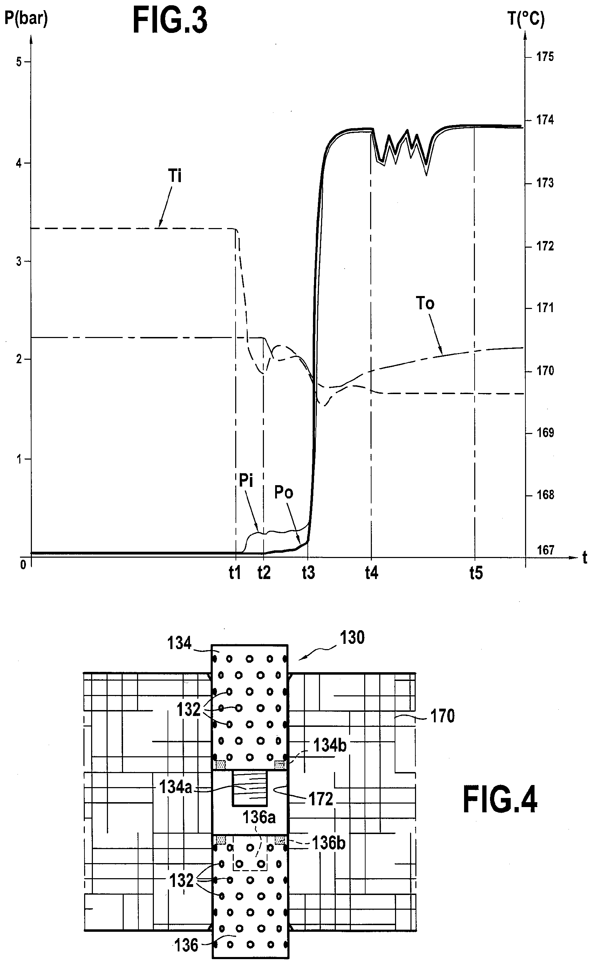

En référence aux figures 1 et 3, un procédé de réparation pouvant être mis en oeuvre à l'aide du dispositif de réparation 10 va maintenant être décrit.

La figure 3 représente la pression Pi (trait plein fin) en entrée de l'embout 30, mesurée par un capteur de pression en entrée de la zone isolée, la pression Po (trait plein épais) à un orifice d'injection situé dans la partie aval de l'embout 30 (par exemple dans le tiers aval de l'embout, voire dans le cinquième aval de l'embout ; ci-après, cette position sera désignée comme «en sortie de l'embout»), mesurée par un capteur de pression audit orifice d'injection, la température Ti (trait en pointillés réguliers) en entrée de l'embout 30 et la température To (trait mixte) en sortie de l'embout. Les données représentées sur la figure 3 ont été acquises sur un intervalle de temps d'environ trois minutes ; toutefois la durée de la réparation dépend du débit d'injection et peut varier selon la quantité de résine injectée. Les valeurs de température et de pression ne sont données qu'à titre indicatif.

En outre, au cas où il n'est pas possible de disposer de capteurs en amont et en aval de l'embout, il est souhaitable de disposer d'au moins un capteur, notamment un capteur de pression, en sortie de l'embout. Ainsi positionné, le signal renvoyé par le capteur permet de s'assurer que la cavité 74 a bien été rebouchée.

Une fois le dispositif installé comme représenté sur la figure 1, on ferme la vanne 56 et on ouvre la vanne 58 de manière à faire le vide au niveau de la zone isolée 76. Une fois que le vide est effectué dans cette zone (c'est-à-dire une fois qu'on a atteint un vide supérieur à 0,9 bar relativement à la pression atmosphérique dans la zone isolée 76), la vanne 24 est ouverte pour permettre l'injection de la résine, préchauffée dans le réchauffeur 60, dans la zone isolée 76 précédemment soumise au vide. L'instant initial représenté sur la figure 3 correspond à un instant après avoir fait le vide dans la zone isolée 76. En l'espèce, l'instant initial de la figure 3 correspond aussi au départ de transfert de résine à partir du réservoir.

A un instant t1, la résine entre dans la zone isolée et commence à emplir l'embout. La pression d'injection, commandée par le pot pression 22, est supérieure à la pression atmosphérique et vaut, dans le présent mode de réalisation, environ 3 bars relativement à la pression atmosphérique. Ainsi, en cumul avec la mise sous vide, il peut y avoir environ 3,99 bar de différence entre le pot pression 22 et le système de mise sous vide 50. La température mesurée diminue du fait de l'injection de la résine préchauffée à une température inférieure à la température de l'embout 30 chauffant. Comme on le voit sur la figure 3, la température To en sortie de l'embout commence à diminuer à un instant t2 postérieur à la décroissance de la température Ti en entrée de l'embout. La durée t2-t1 représente le temps que met la résine à aller du point de mesure en entrée au point de mesure en sortie de l'embout. En outre, la température To diminue moins que la température Ti puisque la résine arrivant en sortie de l'embout est moins froide, du fait de son passage dans l'embout chauffant. Lors de l'injection, la résine se diffuse dans la pièce 70 par le biais de l'embout 30 comprenant les orifices d'injection 32.

Une augmentation brutale de la pression en sortie de l'embout 30, c'est-à-dire à l'instant t3 sur la figure 3, traduit le fait que la cavité 74 est entièrement comblée. Cette augmentation brutale est représentée par une rupture de pente des courbes de pression sur la figure 3, à l'instant t3.

A un instant t4, on ouvre alors la vanne 56 pour permettre d'évacuer les porosités qui auraient subsisté dans la résine injectée. Une fois que de la résine apparaît dans le piège à vide 52, la vanne 56 peut être fermée. On continue ensuite à injecter de la résine par le canal d'entrée 24. Lorsque la pression se stabilise à un niveau maximal (instant t5), l'injection est arrêtée.

Le dispositif est ensuite laissé tel quel pendant le durcissement de la résine (non représenté sur la figure 3). Une fois la résine durcie, il est possible de retirer l'élément d'étanchéité 40 puis l'embout 30 de la pièce 70. La pièce 70 comporte alors un trou 72 qui a une forme complémentaire à celle de l'embout 30. Si l'embout a été choisi de façon à correspondre au trou 72 d'origine, alors la pièce 70 comporte un trou 72 réparé et ayant directement la bonne forme, sans nécessiter d'usinage supplémentaire.

Enfin, le procédé de réparation selon l'invention peut comprendre l'analyse de la carotte de résine durcie restée dans le corps creux de l'embout. L'analyse des propriétés de cette carotte permet de caractériser la résine qui a été injectée dans la cavité 74, et par suite d'estimer la qualité de la réparation effectuée (notamment le taux de polymérisation de la résine).

Alternativement ou en complément, le contrôle de la qualité de la réparation effectuée peut comprendre un contrôle non destructif, notamment par ultrasons, avant et/ou après injection de la zone réparée pour vérifier que les zones défectueuses ont été comblées. Alternativement ou en complément, il est possible d'utiliser une caméra thermique pour suivre le parcours de la résine, qui est chaude pendant l'injection, au sein du matériau à réparer.

Une fois que le dispositif est installé, le procédé qui vient d'être décrit peut éventuellement être mis en œuvre par un ordinateur sur la base des signaux renvoyés par les capteurs de température et de pression, dans la mesure où les différents instants de début/arrêt d'injection ou encore d'ouverture/fermeture de vannes sont caractérisés par des évolutions de pression et/ou de température remarquables et détectables par un programme d'ordinateur.

Plusieurs caractéristiques peuvent être envisagées pour faciliter l'extraction de l'embout d'injection 30 sans endommager le trou 72 qui vient d'être réparé. Selon un exemple, l'embout d'injection 30 peut être en aluminium teflonné (c'est-à-dire en aluminium recouvert d'une couche de matériau anti-adhérent tel que le téflon). Les propriétés anti-adhérentes à l'extérieur de l'embout 30 servent à extraire l'embout 30 de la pièce 70, tandis que les propriétés anti-adhérentes à l'intérieur de l'embout 30 servent à extraire la carotte de résine polymérisée de l'embout 30.

Alternativement ou en complément, les orifices d'injection 32 peuvent être amincis à leur bord, de façon à être tranchants (aiguisés) et pouvoir sectionner la résine durcie au travers des orifices 32 lorsque l'on effectue une rotation de l'embout 30 dans le trou 72. Le diamètre des trous peut être dimensionné de sorte que la section de la résine durcie n'exige pas de couple trop important et n'endommage pas le trou 72. Par exemple, le diamètre des trous peut être compris entre 0,5 mm et 2 mm de diamètre, de préférence de l'ordre de 1 mm. Le diamètre des trous peut être optimisé par l'homme du métier selon la viscosité de la résine injectée. De manière générale, l'embout extractible peut effectuer une certaine trajectoire (par exemple un dévissage) pour pouvoir être retiré sans endommager le trou réparé.

Alternativement ou en complément, pour assurer une bonne préparation de surface et un bon nettoyage de la zone à combler, il est possible de dégraisser la pièce 70 préalablement à sa mise en place dans le dispositif 10. Le dégraissage peut ensuite être suivi d'un étuvage de la pièce.

Les figures 4 à 7A présentent l'embout d'injection dans d'autres modes de réalisation.

La figure 4 présente un embout 130 en deux parties 134, 136, en cours d'insertion dans un trou lisse 172 d'une pièce 170. Chaque partie 134, 136 de l'embout 130 est un corps creux muni d'orifices d'injection 132 éventuellement similaires aux orifices 32 de l'embout 30 selon le premier mode de réalisation. La partie 134 comprend une partie saillante 134a filetée et destinée à coopérer avec un taraudage complémentaire 136a prévu sur la partie 136. En outre, les parties 134, 136 comprennent respectivement des joints toriques 134b, 136b pour assurer l'étanchéité des deux parties 134, 136 de l'embout entre elles. L'assemblage de l'embout 130 se fait par vissage des deux parties 134, 136 l'une dans l'autre. Le retrait de l'embout 130 se fait par dévissage des deux parties 134, 136 l'une par rapport à l'autre, la rotation de chaque partie 134, 136 ayant pour effet de sectionner la résine durcie dans les orifices d'injection 132. Les parties 134 et 136 peuvent posséder des têtes avec des empreintes de forme compatible avec un outil de serrage/desserrage tel qu'une clé de type torque ou cruciforme, par exemple.

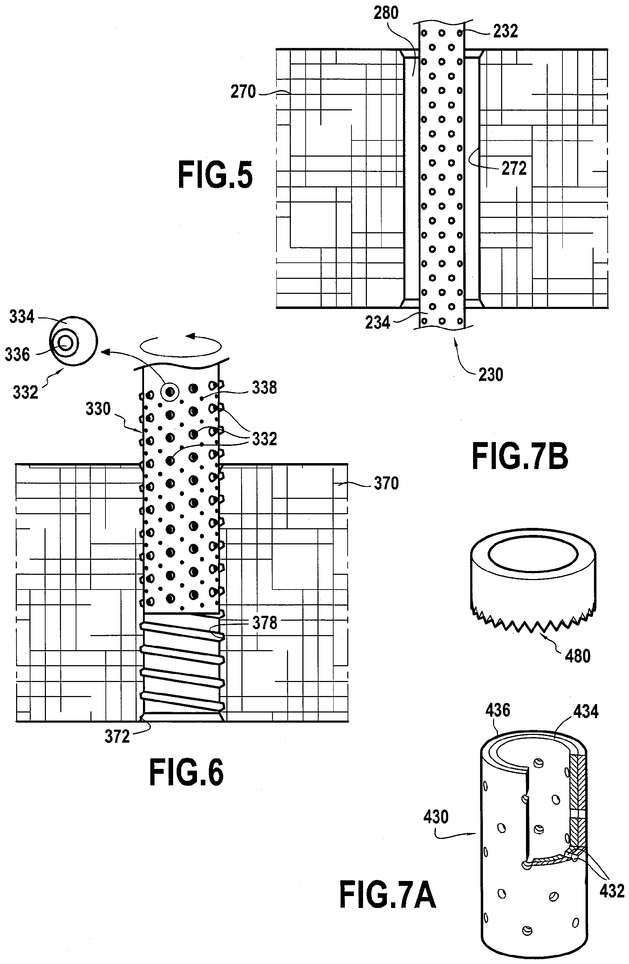

Selon un autre mode de réalisation, la figure 5 présente un embout 230 comprenant une baudruche 234 située à la périphérie extérieure de l'embout 230. La baudruche 234 est un élément gonflable qui est ici représenté dans son état dégonflé. Un interstice 280 subsiste donc entre la baudruche 234 et le trou 272. Lorsque la baudruche 234 est gonflée, elle comble l'interstice 280 et prend la forme du trou 272 dans lequel elle est insérée. Le trou 272 est ici un trou lisse cylindrique, mais il apparaîtra clairement que ce mode de réalisation est avantageux pour des trous de forme irrégulière. La baudruche comporte des orifices d'injection 232, par exemple des micropores, pour l'injection de la résine dans une cavité radialement à l'extérieur de l'embout 230. Pour retirer l'embout 230 du trou 272 après durcissement de la résine, il suffit de dégonfler la baudruche. Les orifices 232 de la baudruche 234 sont suffisamment fins pour que les filaments de résine durcie dans les orifices 232 puissent être facilement rompus.

Plus généralement, la baudruche peut être remplacée par tout corps à géométrie variable, par exemple un corps à grand coefficient de dilatation thermique.

Selon un autre mode de réalisation, la figure 6 présente un embout 330 configuré pour former un trou taraudé 372. Comme représenté sur la loupe de la figure 6, l'embout 330 comprend une pluralité de picots troués 332 comportant une protubérance 334, en l'espèce tronconique, percée d'un trou 336 formant orifice d'injection. Les picots 332 sont disposés sur la surface extérieure de l'embout 330 de façon à reproduire le sillage d'un filetage. De cette façon, les picots 332 peuvent coopérer avec un taraudage 378 du trou 372 à réparer, aussi bien pour l'insertion de l'embout 330 dans le trou 372 que pour son extraction (ces deux opérations se faisant donc par vissage/dévissage de l'embout 330 dans le trou 372). En outre, l'embout 330 comporte d'autres orifices d'injection 338, non saillants.

Ainsi, dans ce mode de réalisation, la forme extérieure de l'embout 330 ne coopère pas (ne correspond pas) exactement à la forme du trou 372 à réparer, puisque l'embout 330 ne comprend pas de filetage intégral exactement complémentaire du taraudage 378. En d'autres termes, l'embout 330 a une forme extérieure sensiblement complémentaire du trou 372. Pour cette raison, lors de l'injection de résine, il est possible que de la résine comble partiellement le taraudage 378. Dans ce cas, l'extraction de l'embout 330 en dévissant l'embout 330 hors du trou 372 permet, grâce à la forme des picots 332, de recreuser le taraudage 378 dans le trou. Ainsi, après extraction de l'embout 330, le trou 372 a directement la forme désirée sans nécessiter d'opération d'usinage supplémentaire. En outre, l'embout 330 peut comprendre des moyens pour coopérer avec un outil permettant d'exercer un couple de rotation de l'embout 330 pris dans la résine durcie. Par exemple, une extrémité de l'embout 330 peut être configurée pour recevoir un tel outil.

Selon une variante, l'embout 330 pourrait comprendre un filetage entièrement formé sur lequel seraient prévus des trous non saillants similaires aux trous 132 de la figure 4.

Selon un autre mode de réalisation, la figure 7A présente un embout 430 comprenant un corps creux 434 et une peau à usage unique 436 (peau consommable, jetable). La peau 436 est placée autour du corps creux 434. Le corps creux 434 et la peau 436 comportent des orifices alignés de façon à former des orifices d'injection 432. Après injection et durcissement de la résine, l'extraction de l'embout 430 du trou peut être réalisée en détruisant au moins partiellement la peau 436, par exemple à l'aide d'une scie cloche 480 telle que représentée sur la figure 7B. En détruisant uniquement la peau 436, la scie cloche 480 laisse au trou exactement la forme qui lui a été donnée, lors de l'injection, par la peau 436 définissant la surface extérieure de l'embout 430.

Selon un autre mode de réalisation, l'embout peut comprendre un corps creux similaire au corps creux 434, et un tamis ou filtre poreux entourant l'embout. Le tamis ou filtre poreux (comprenant par exemple des micropores) permet à la fois de diffuser la résine de manière homogène et de favoriser l'extraction de l'embout.

En variante des modes de réalisation précédemment décrits, si la nature de la résine le permet, l'injection peut être effectuée à froid.

On a représenté le dispositif 10 avec un seul embout mais il pourrait bien entendu en comprendre plusieurs, l'injection de résine et/ou la mise sous vide étant alors mutualisée ou individualisée.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif de réparation (10) d'un trou (72) d'une pièce (70), comprenant un réservoir (20) de résine, un embout d'injection (30) relié au réservoir (20), l'embout (30) étant prévu pour être inséré dans le trou (72), l'embout comprenant au moins un orifice d'injection (32) permettant l'injection de résine dans au moins une cavité (74) située autour de l'embout (30), **caractérisé en ce que** l'embout (30) est configuré pour être extrait du trou (72) après durcissement de la résine, les moyens pour assurer l'extraction de l'embout (30) du trou (72) après durcissement de la résine comprenant au moins l'une des caractéristiques suivantes :
- l'embout (230) comprend une baudruche (234) comportant au moins un dudit au moins un orifice d'injection (32) ;
- l'au moins un orifice d'injection (32) a un bord aminci ;
- l'embout (430) comprend un corps creux (434) et une peau à usage unique placée autour du corps creux (436) ;
- l'embout (430) comprend un corps creux (434) et un tamis ou filtre poreux entourant le corps creux.

2. Dispositif de réparation (10) selon la revendication 1, comprenant en outre un élément d'étanchéité (40), configuré pour isoler hermétiquement une zone (76) de la pièce (70) comprenant le trou (72) lorsque l'embout (30) est inséré dans le trou.

3. Dispositif de réparation (10) selon la revendication 2, comprenant en outre un système de mise sous vide (50) configuré pour mettre sous vide la zone isolée (76).

4. Dispositif de réparation (10) selon l'une quelconque des revendications 1 à 3, comprenant en outre des moyens de chauffage (60) configurés pour chauffer la résine provenant du réservoir.

5. Dispositif de réparation (10) selon l'une quelconque des revendications 1 à 4, comprenant en outre au moins un capteur de température et/ou un capteur de pression.

6. Dispositif de réparation (10) selon l'une quelconque des revendications 1 à 5, dans lequel l'embout (330) est configuré pour former un trou taraudé (372) lors de son retrait de la pièce (70).

7. Dispositif de réparation (10) selon l'une quelconque des revendications 1 à 6, dans lequel l'embout (30) est configuré pour être déconnecté du réservoir.

8. Dispositif de réparation (10) selon l'une quelconque des revendications 1 à 7, dans lequel l'embout (30) comprend un corps creux, l'au moins un orifice d'injection (32) étant disposé sur une surface extérieure du corps creux.

9. Dispositif de réparation selon l'une quelconque des revendications 1 à 8, dans lequel les moyens pour assurer l'extraction de l'embout (30) du trou (72) après durcissement de la résine comprennent en outre au moins l'une des caractéristiques suivantes :
- l'embout est recouvert d'un matériau anti-adhérent radialement à l'extérieur ;
- la surface totale des orifices d'injection (32) est inférieure à 40% de la surface extérieure de l'embout ;
- le diamètre de l'au moins un orifice d'injection est compris entre 0,5 mm et 2 mm.

10. Procédé de réparation d'un trou (72) d'une pièce (70), comprenant :
- l'insertion, dans le trou, d'un embout d'injection (30) relié à un réservoir (20) et comprenant au moins un orifice d'injection (32) ;
- l'injection d'une résine depuis le réservoir (20), par l'orifice d'injection (32), dans au moins une cavité (74) située autour de l'embout (30) ;
- le durcissement de la résine ;
- le retrait de l'embout (30) hors du trou,
le procédé étant **caractérisé en ce que** l'embout demeure inséré dans le trou pendant le durcissement de la résine.

11. Procédé de réparation selon la revendication 10, comprenant, avant et/ou pendant l'injection, une étape de mise à vide d'une zone (76) comprenant le trou (72), isolée hermétiquement.

12. Procédé de réparation selon la revendication 10 ou 11, comprenant, après durcissement de la résine injectée, l'analyse de la carotte de résine durcie restée dans l'embout.

## Patentansprüche

1. Vorrichtung zum Reparieren (10) einer Bohrung (72) in einem Werkstück (70) umfassend einem Harzbehälter (20), einem Einspritzzapfen (30), der mit dem Behälter (20) verbunden ist, wobei der Zapfen (30) so ausgelegt ist, dass er in die Bohrung (72) eingeführt wird, wobei der Zapfen mindestens eine Einspritzöffnung (32) umfasst, welche das Einspritzen von Harz in mindestens einen Hohlraum (74) um den Zapfen (30) ermöglicht, **dadurch gekennzeichnet, dass** der Zapfen (30) so konfiguriert ist, dass er nach Aushärten des Harzes aus der Bohrung (72) entnommen wird, wobei die Mittel zur Gewährleistung der Entnahme des Zapfens (30) aus der Bohrung (72) nach Aushärten des Harzes mindestens eine der folgenden Eigenschaften umfassen:
- der Zapfen (230) eine dünne Gummifolie (234) umfasst, die mindestens eine genannte Einspritzöffnung (32) aufweist;
- die mindestens eine Einspritzöffnung (32) einen verdünnten Rand besitzt;
- der Zapfen (430) einen Hohlkörper (434) und eine Hülle für den einmaligen Gebrauch um den Hohlkörper (436) umfasst;
- der Zapfen (430) einen Hohlkörper (434) und ein Sieb oder einen porösen Filter um den Hohlkörper umfasst.

2. Vorrichtung zum Reparieren (10) nach Anspruch 1, die ferner ein Dichtungselement (40) umfasst, das so konfiguriert ist, dass ein Bereich (76) des Werkstücks (70) mit der Bohrung (72) hermetisch abgedichtet wird, wenn der Zapfen (30) in die Bohrung eingeführt wird.

3. Vorrichtung zum Reparieren (10) nach Anspruch 2, die ferner ein Vakuumsystem (50) umfasst, das so konfiguriert ist, dass der abgedichtete Bereich (76) unter Vakuum gesetzt wird.

4. Vorrichtung zum Reparieren (10) nach einem der Ansprüche 1 bis 3, die ferner Heizmittel (60) umfasst, die so konfiguriert sind, dass das Harz aus dem Behälter erhitzt wird.

5. Vorrichtung zum Reparieren (10) nach einem der Ansprüche 1 bis 4, die ferner mindestens einen Temperatursensor und/oder Drucksensor umfasst.

6. Vorrichtung zum Reparieren (10) nach einem der Ansprüche 1 bis 5, wobei der Zapfen (330) so konfiguriert ist, dass eine Gewindebohrung (372) bei dessen Entnahme aus dem Werkstück (70) entsteht.

7. Vorrichtung zum Reparieren (10) nach einem der Ansprüche 1 bis 6, wobei der Zapfen (30) so konfiguriert ist, dass er vom Behälter getrennt wird.

8. Vorrichtung zum Reparieren (10) nach einem der Ansprüche 1 bis 7, wobei der Zapfen (30) einen Hohlkörper umfasst, wobei die mindestens eine Einspritzöffnung (32) auf einer Außenfläche des Hohlkörpers angeordnet ist.

9. Vorrichtung zum Reparieren nach einem der Ansprüche 1 bis 8, wobei die Mittel zur Gewährleistung der Entnahme des Zapfens (30) aus der Bohrung (72) nach Aushärten des Harzes ferner mindestens eine der folgenden Eigenschaften aufweisen:
- der Zapfen radial mit einem nicht haftenden Material an der Außenseite beschichtet ist;
- die Gesamtfläche der Einspritzöffnungen (32) weniger als 40% der Außenfläche des Zapfens ist;
- der Durchmesser der mindestens einen Einspritzöffnung zwischen 0,5 mm und 2 mm liegt.

10. Verfahren zum Reparieren einer Bohrung (72) in einem Werkstück (70) mit:
- Einführen eines Einspritzzapfens (30) in die Bohrung, der mit einem Behälter (20) verbunden ist und mindestens eine Einspritzöffnung (32) umfasst;
- Einspritzen eines Harzes ab einem Behälter (20) durch die Einspritzöffnung (32) in mindestens einen Hohlraum (74) um den Zapfen (30);
- Aushärten des Harzes;
- Entnehmen des Zapfens (30) aus der Bohrung,
wobei das Verfahren **dadurch gekennzeichnet ist, dass** der Zapfen beim Aushärten des Harzes in der Bohrung verbleibt.

11. Verfahren zum Reparieren nach Anspruch 10, das vor und/oder während des Einspritzens einen Schritt zum Unter-Vakuum-Setzen eines hermetisch abgedichteten Bereichs (76) mit einer Bohrung (72) umfasst.

12. Verfahren zum Reparieren nach Anspruch 10 oder 11, das nach dem Aushärten des eingespritzten Harzes die Analyse des ausgehärteten Harzkerns, der im Zapfen geblieben ist, umfasst.

## Claims

1. A repair device (10) for repairing a hole (72) in a part (70), the device comprising a resin tank (20), and an injector endpiece (30) connected to the tank (20), the endpiece (30) being designed to be inserted in the hole (72), the endpiece including at least one injection orifice (32) enabling resin to be injected into at least one cavity (74) situated around the endpiece (30), **characterized in that** the endpiece (30) is configured to be extracted from the hole (72) after the resin has hardened, the means for enabling extraction of the endpiece (30) from the hole (72) after the resin has hardened comprising at least one of the following features:
- the endpiece (230) comprises a bladder (234) including at least one of said at least one injection orifice (32);
- the at least one injection orifice (32) has a thinned edge;
- the endpiece (430) comprises a hollow body (434) and a skin for single use, placed around the hollow body (436) ;
- the endpiece (430) comprises a hollow body (434) and a porous screen or filter surrounding the endpiece.

2. A repair device (10) according to claim 1, further including a sealing element (40) configured to isolate hermetically a zone (76) of the part (70) that includes the hole (72) when the endpiece (30) is inserted in the hole.

3. A repair device (10) according to claim 2, further including a vacuum system (50) configured to establish a vacuum in the isolated zone (76).

4. A repair device (10) according to any one of claims 1 to 3, further including heater means (60) configured for heating the resin coming from the tank.

5. A repair device (10) according to any one of claims 1 to 4, further including at least a temperature sensor and/or a pressure sensor.

6. A repair device (10) according to any one of claims 1 to 5, wherein the endpiece (330) is configured to form a tapped hole (372) while it is being withdrawn from the part (70).

7. A repair device (10) according to any one of claims 1 to 6, wherein the endpiece (30) is configured to be disconnected from the tank.

8. A repair device (10) according to any one of claims 1 to 7, wherein the endpiece (30) comprises a hollow body, the at least one injection orifice (32) being arranged in an outside surface of the hollow body.

9. A repair device according to any one of claims 1 to 8, wherein the means for enabling extraction of the endpiece (30) from the hole (72) after the resin has hardened further comprise at least one of the following features:
- the endpiece is coated with a non-stick material radially outside;
- the total area of the injection orifices (32) is less than 40% of the outside area of the endpiece;
- the diameter of the at least one injection orifice lies in the range 0.5 mm to 2 mm.

10. A repair method for repairing a hole (72) in a part (70), the method comprising:
- inserting into the hole an injector endpiece (30) connected to a tank (20) and including at least one injection orifice (32);
- injecting a resin through the injection orifice (32) into at least one cavity (74) situated around the endpiece (30);
- hardening the resin; and
- withdrawing the endpiece (30) from the hole, **characterized in that** the endpiece remains inserted in the hole while the resin hardens.

11. A repair method according to claim 10, comprising, before and/or during injection, a step of applying a vacuum to a hermetically isolated zone (76) including the hole (72).

12. A repair method according to claim 10 or claim 11, comprising, after the injected resin has hardened, analyzing the core of hardened resin that has remained in the endpiece.
